# EUROPEAN PATENT APPLICATION

(11) **EP 4 207 026 A1**
(43) Date of publication of application: **05.07.2023**
(21) Application number: 21861286.9
(22) Date of filing: 13.08.2021
(51) Int. Cl.: G06Q 20/10, G06Q 20/06, G06Q 20/22, G06Q 20/32, G06Q 20/34

(54) **TERMINAL DEVICE AND SETTLEMENT METHOD**

(30) Priority: 25.08.2020 JP 2020142125
(71) Applicant: NTT Communications Corporation, Tokyo 100-8019 (JP)
(72) Inventor: HIGASHIDE, Haruhisa, Tokyo 100-8019 (JP); KATOU, Yasuhide, Tokyo 100-8019 (JP); TOMODA, Mitsuya, Tokyo 100-8019 (JP); NUMA, Kentaro, Tokyo 100-8019 (JP)
(74) Representative: Hoffmann Eitle
(86) International application number: PCT/JP2021/029837
(87) International publication number: WO 2022/044858

(57) **Abstract**

A terminal device (20U) equipped with an application being an application in which a plurality of settlement cards are registered as a payment method of electronic money, and an application that performs settlement processing of the electronic money includes a storage unit (22) configured to store a schedule of a user of the terminal device (20U), a card selection unit (233) configured to select any one of the plurality of settlement cards as a payment method of the electronic money in the application in accordance with a day of a week and a time slot, or a plan registered in the schedule, and a settlement processing unit (234) configured to execute settlement processing of the electronic money in the application using the settlement card selected by the card selection unit (233), as a payment method of the electronic money.

## Description

### [Technical Field]

The present invention relates to a terminal device and a settlement method.

### [Background Art]

The execution of general commerce or electronic commerce via the Internet using a mobile terminal including an electronic wallet function of holding electronic money, without using cash has been put in practical use. In addition, an application that can register a plurality of settlement cards as payment methods of electronic money is provided, and a user can also select a settlement card on a terminal at the time of settlement of electronic money.

### [Citation List]

### [Patent Citation]

Patent Document 1: Japanese Laid-open Patent Publication No. 2006-106988

### [Summary of Invention]

### [Technical Problem]

Here, the user has performed cumbersome processing of manually switching a settlement card suitable for a purpose, on an electronic money setting screen each time settlement is made by electronic money. Thus, after the user had switched payment by electronic money to a corporate card during business hours, the user has forgotten to switch the card to a personal card, and the user has sometimes made payment by the corporate card for nonbusiness reasons in some cases.

The present invention has been devised in view of the foregoing, and aims to provide a terminal device and a settlement method that can automatically switch a settlement card to be used as a payment method of electronic money.

### [Solution to Problem]

In order to solve the above-described problems and achieve the object, a terminal device according to the present invention is a terminal device terminal device equipped with an application being an application in which a plurality of settlement cards are registered as a payment method of electronic money, and an application that performs settlement processing of the electronic money, the terminal device including: a storage unit configured to store a schedule of a user of the terminal device; a selection unit configured to select any one of the plurality of settlement cards as a payment method of the electronic money in the application in accordance with a day of a week and a time slot, or a plan registered in the schedule; and a settlement processing unit configured to execute settlement processing of the electronic money in the application using the settlement card selected by the selection unit, as a payment method of the electronic money.

### [Advantageous Effects of Invention]

According to the present invention, it is possible to automatically switch a settlement card to be used as a payment method of electronic money.

### [Brief Description of Drawings]

FIG. 1 is a block diagram illustrating an example of a configuration of a settlement system according to a first embodiment.
FIG. 2 is a block diagram illustrating an example of a configuration of a server device according to the first embodiment.
FIG. 3 is a diagram illustrating an example of a data configuration of a money amount information storage unit.
FIG. 4 is a diagram illustrating an example of a data configuration of a usage history information storage unit.
FIG. 5 is a block diagram illustrating an example of a configuration of a terminal according to the first embodiment.
FIG. 6 is a diagram illustrating an example of a data configuration of card selection information illustrated in FIG. 5.
FIG. 7 is a diagram describing automatic switching processing of a settlement card according to the first embodiment.
FIG. 8 is a sequence diagram illustrating a processing procedure of settlement processing according to the first embodiment.
FIG. 9 is a block diagram illustrating an example of a configuration of a terminal according to a second embodiment.
FIG. 10 is a diagram illustrating an example of a data configuration of card selection information illustrated in FIG. 9.
FIG. 11 is a diagram describing automatic switching processing of a settlement card according to the second embodiment.
FIG. 12 is a sequence diagram illustrating a processing procedure of settlement processing according to the second embodiment.
FIG. 13 is a block diagram illustrating an example of a configuration of a terminal according to a third embodiment.
FIG. 14 is a diagram describing automatic switching processing of a settlement card according to the third embodiment.
FIG. 15 is a sequence diagram illustrating a processing procedure of settlement processing according to the third embodiment.
FIG. 16 is a block diagram illustrating an example of a configuration of a terminal according to a fourth embodiment.
FIG. 17 is a diagram describing automatic switching processing of a settlement card according to the fourth embodiment.
FIG. 18 is a sequence diagram illustrating a processing procedure of settlement processing according to the fourth embodiment.
FIG. 19 is a diagram illustrating an example of a top-up screen of electronic money in a plurality of types of currencies.
FIG. 20 is a diagram illustrating a computer that executes a program.

### [Embodiments for Carrying Out the Invention]

Hereinafter, an embodiment of a terminal device and a settlement method according to this application will be described in detail based on the drawings. Note that the terminal device and the settlement method according to this application are not limited by this embodiment.

### [Embodiment]

In the following embodiment, flows of processing to be executed by a terminal device and a settlement method according to an embodiment will be sequentially described, and effects caused by the embodiment will be lastly described.

### [First Embodiment]

First of all, the first embodiment will be described. In the first embodiment, an example of a settlement system that manages settlement processing of electronic money in a terminal such as a smartphone will be described. Here, in the first embodiment, the terminal is equipped with an electronic money settlement application for performing settlement processing of electronic money. In the electronic money settlement application, a plurality of settlement cards (for example, credit cards) can be registered as payment methods of electronic money.

### [Configuration of Settlement System]

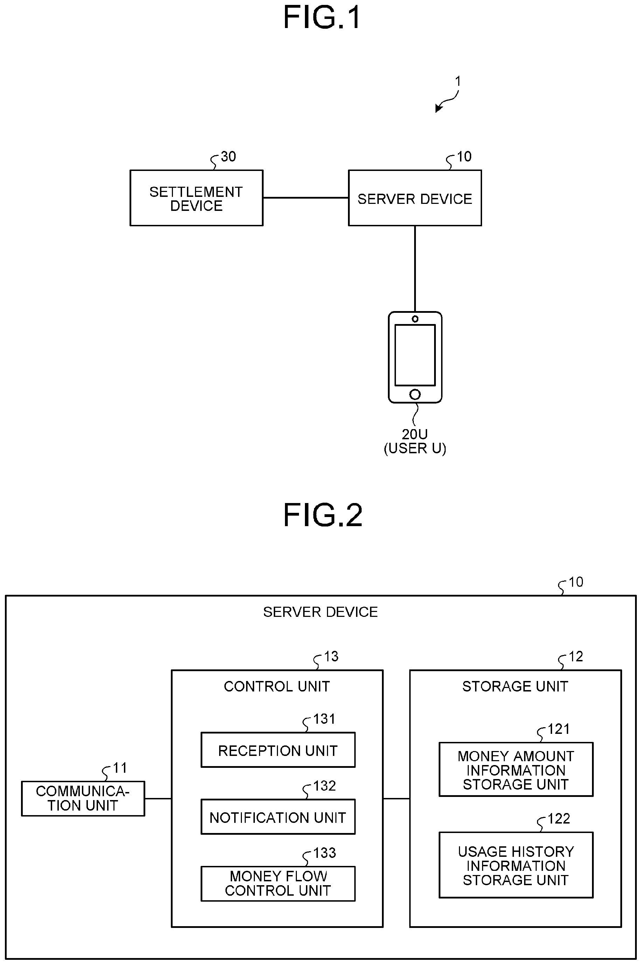

A configuration of a settlement system according to the first embodiment will be described. FIG. 1 is a block diagram illustrating an example of a configuration of the settlement system according to the first embodiment.

As illustrated in FIG. 1, a settlement system 1 according to the first embodiment includes a terminal 20U to be used by a user U, and a server device 10 that manages settlement processing of electronic money of the terminal 20U (terminal device) via a network or the like. Note that encryption processing or the like is applied to each piece of communication processing executed between the settlement system 1 and the terminal 20U. In addition, the configuration illustrated in FIG. 1 is merely an example, and a specific configuration and the number of devices are not specifically limited.

The server device 10 manages settlement processing of electronic money that is executed on the electronic money settlement application of the terminal 20U. In a case where settlement processing of electronic money is executed by the terminal 20U for the payment to a settlement device 30 of a store, the server device 10 subtracts electronic money from a remaining balance of electronic money that is held by the user of the terminal 20U, in accordance with a settlement amount. In addition, in a case where a settlement card to be used as a payment method of electronic money is designated on the electronic money settlement application of the terminal 20U, and electronic money is topped up via settlement (for example, credit-card settlement) by the designated settlement card, the server device 10 adds a topped-up amount to the remaining balance of electronic money.

FIG. 2 is a block diagram illustrating an example of a configuration of a server device according to the first embodiment. As illustrated in FIG. 2, the server device 10 includes a communication unit 11 that controls communication regarding various types of information, a storage unit 12 that stores data and programs necessary for various types of processing to be executed by a control unit 13, and the control unit 13 that executes various types of processing. Hereinafter, processing to be executed by each unit included in the server device 10 will be described.

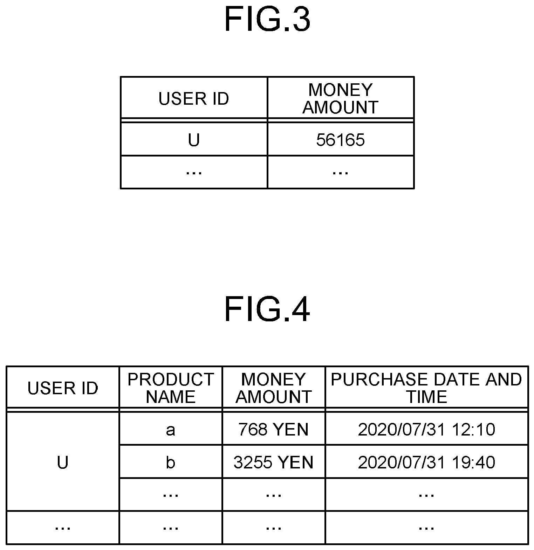

The storage unit 12 includes a money amount information storage unit 121 that stores an amount of electronic money for each user, and a usage history information storage unit 122 that stores a usage history of electronic money used by the user. FIG. 3 is a diagram illustrating an example of a data configuration of the money amount information storage unit 121. As illustrated in FIG. 3, the money amount information storage unit 121 includes a user ID and a money amount as items, and stores a topped-up amount of electronic money held by each user. FIG. 4 is a diagram illustrating an example of a data configuration of the usage history information storage unit 122. For example, as exemplified in FIG. 4, the usage history information storage unit 122 stores a user ID, a "product name" indicating a name of a purchased product, a "money amount" indicating a purchase amount of the product, and "purchase date and time" indicating date and time at which the product is purchased, in association with each other.

The control unit 13 includes a reception unit 131 that receives various notifications transmitted from the settlement device 30 of the store, a notification unit 132 that transmits various notifications regarding electronic money settlement, and a money flow control unit 133 that subtracts a used money amount from electronic money topped up by the terminal 20U of the user U, and adds money to the settlement device 30 of the store, in accordance with a usage notification of electronic money of the user U (subtraction processing request) from the settlement device 30 of the store.

The terminal 20U is a smart device such as a smartphone or a tablet that is equipped with the electronic money settlement application, and is a mobile terminal device that can perform communication with an arbitrary server device 10 via a radio communication network. Note that the terminal 20U may be an information processing device such as a desktop personal computer (PC) or a laptop PC. In addition, the terminal 20U may include a function of identifying a current position using a positioning system such as a global positioning system (GPS), and outputting position information indicating the identified position, and moreover, a function of determining a name of a building or the like at the current position.

In the electronic money settlement application installed on the terminal 20U, a plurality of settlement cards can be registered as payment methods of electronic money. The terminal 20U performs communication with a management server (not illustrated) of each settlement card registered in the electronic money settlement application, and makes settlement (for example, credit card settlement). Then, in the electronic money settlement application installed on the terminal 20U, electronic money is topped up via settlement (for example, credit card settlement) by a settlement card.

Here, in addition to a credit card B (personal card) privately owned by the user U, and a credit card C (corporate card) supplied from an employer of the user U, a mobile settlement card topped up with electronic money A of a type different from electronic money to be used for settlement on the electronic money settlement application can be registered in the terminal 20U as a payment method of electronic money. The electronic money A can be topped up via a credit card having a partnership with an issuing corporation of the electronic money A, for example, and can also be topped up by point exchange.

Then, in the terminal 20U, any one of a plurality of settlement cards is automatically selected as a payment method of electronic money in accordance with a day of the week and a time slot, or a plan registered in a schedule application of the terminal 20U, and a settlement card is switched to the selected settlement card.

### [Configuration of Terminal]

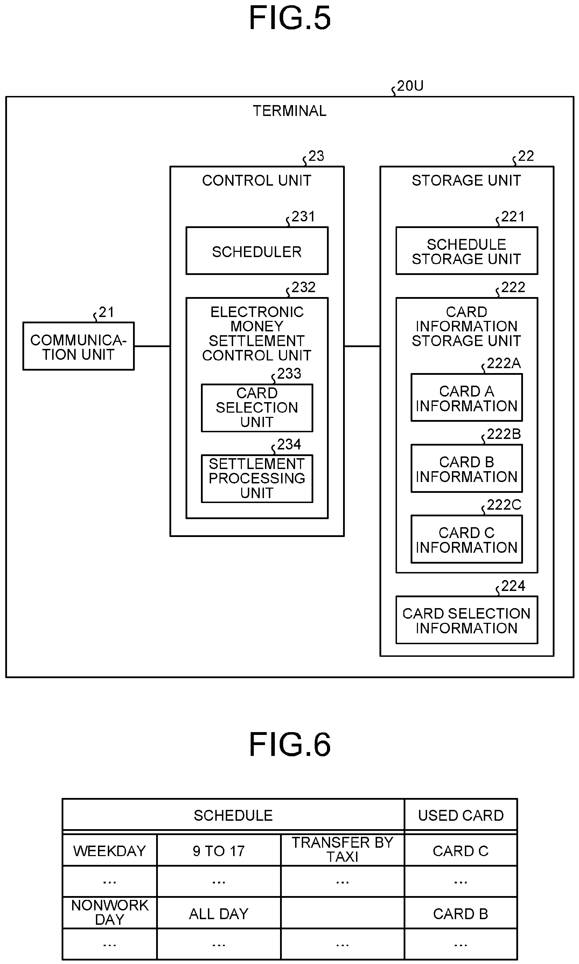

In view of the foregoing, a configuration of the terminal 20U will be described. FIG. 5 is a block diagram illustrating an example of a configuration of the terminal 20U according to the first embodiment. As illustrated in FIG. 5, the terminal 20U includes a communication unit 21, a storage unit 22, and a control unit 23.

The communication unit 21 controls communication regarding various types of information. For example, the communication unit 11 controls communication performed with the settlement device 30 of the store, and communication performed with a management server (not illustrated) of each settlement card registered in the electronic money settlement application.

The storage unit 22 stores data and programs necessary for various types of processing to be executed by the control unit 23. For example, the storage unit 12 is a semiconductor memory device such as a random access memory (RAM) or a flash memory, or a storage device such as a hard disc or an optical disc. The storage unit 22 includes a schedule storage unit 221, a card information storage unit 222, and card selection information 224.

The schedule storage unit 221 stores a registered schedule of the user U via an email or the like in which operations, plans, destinations, and the like of the user U are described. As schedules of the user U, business plans and private plans of the user U are registered in the schedule storage unit 221 together with dates and times.

The card information storage unit 222 stores information regarding a settlement card registered as a payment method of electronic money. The card information storage unit 222 stores, for example, information regarding communication with a management server of each settlement card, settlement transaction information of each card, a remaining balance of electronic money added by payment by each settlement card, and the like. Card A information 222A is information regarding a mobile settlement card for holding the electronic money A, card B information 222B is information regarding the credit card B (personal card), and card C information 222C is information regarding the credit card C (corporate card).

The card selection information 224 is information that associates a day of the week and a time slot, or a plan registered in the schedule application of the terminal 20U, and a settlement card to be used as a payment method of electronic money.

For example, FIG. 6 is a diagram illustrating an example of a data configuration of the card selection information 224 illustrated in FIG. 5. As illustrated in FIG. 6, in the card selection information 224, a settlement card to be selected as a payment method is associated with a day of the week, a time slot, and plan content in a schedule field. For example, in a case where a plan of transfer by taxi during a time slot from 9 to 17 on a weekday is registered as a schedule, a settlement card to be used is the credit card C (corporate card). In addition, in a case where no plan is registered throughout a nonwork day, a settlement card to be used is the credit card B (personal card). The card selection information 224 is preset and stored, for example.

The control unit 23 includes an internal memory for storing programs defining various processing procedures or the like, and requested data, and executes various types of processing based on these. Here, the control unit 23 is an electronic circuit such as a central processing unit (CPU) or a micro processing unit (MPU), or an integrated circuit such as an application specific integrated circuit (ASIC) or a field programmable gate array (FPGA). The control unit 13 includes a scheduler 231 and an electronic money settlement control unit 232.

The scheduler 231 controls the schedule application of the terminal 20U to perform schedule registration of the user U, schedule display, and the like. The scheduler 231 registers a schedule of the user U into the schedule storage unit 221 via an email or the like in which operations of the terminal 20U that are performed by the user U, plans, destinations, and the like are described.

The electronic money settlement control unit 232 controls electronic money settlement for the payment of purchase money or the like by controlling the electronic money settlement application. The electronic money settlement control unit 232 includes a card selection unit 233 (selection unit) and a settlement processing unit 234.

The card selection unit 233 selects any one of a plurality of settlement cards as a payment method of electronic money in the electronic money settlement application in accordance with a day of the week and a time slot, or a plan registered in a schedule. The card selection unit 233 refers to the card selection information 224, and selects the credit card B (personal card) or the credit card C (corporate card) as a payment method of electronic money from among a plurality of settlement cards in accordance with a day of the week and a time slot, or content of a plan registered in a schedule.

The settlement processing unit 234 executes settlement processing of electronic money in the electronic money settlement application using a settlement card selected by a card selection unit, as a payment method of electronic money. The settlement processing unit 234 makes payment of purchase money by electronic money topped up via settlement (for example, credit card settlement) by a designated settlement card. Alternatively, in a case where the electronic money A is selected, the settlement processing unit 234 changes the electronic money A into electronic money to be used for settlement, and make payment of purchase money by the electronic money.

### [Selection Example of Settlement Card]

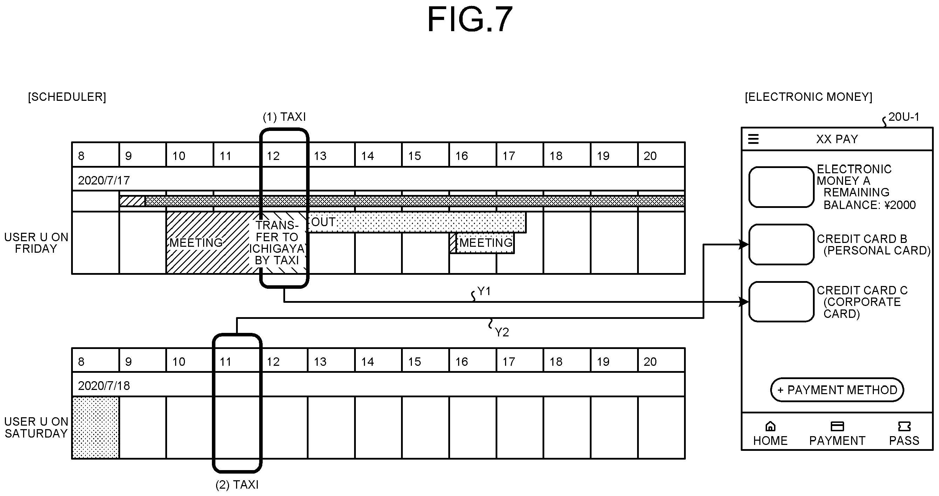

In the terminal 20U, a settlement card to be used as a payment method of electronic money settlement in the electronic money settlement application is automatically switched in tandem with a scheduler. The switching of a settlement card will be specifically described with reference to FIG. 7 to be described below. FIG. 7 is a diagram describing automatic switching processing of a settlement card according to the first embodiment. FIG. 7 illustrates a schedule of the user U on Friday and a schedule of the user U on Saturday, and an electronic money payment screen 20U-1 of the terminal 20U.

For the user U, business plans during the forenoon and during the afternoon on Friday are entered, and a plan of "transfer on business by taxi" during a time slot from 12 to 13 on Friday is entered. Thus, in the terminal 20U, the card selection unit 233 refers to the card selection information 224, and selects the credit card C (corporate card) as a settlement card associated with transfer by taxi during a time slot from 12 to 13 on Friday (weekday). Consequently, when the user U "transfers on business by taxi" during a time slot from 12 to 13, and makes settlement for taxi fare by electronic money, the electronic money is automatically paid from the credit card C (corporate card) ((1) and an arrow Y1 in FIG. 7).

In contrast to this, no schedule is registered for the user U on Saturday. Thus, in the terminal 20U, the card selection unit 233 refers to the card selection information 224, and selects the credit card B (personal card) as a settlement card associated with a nonwork day. Consequently, when the user U "transfers for nonbusiness reasons by taxi" at 11 on Saturday, for example, and makes settlement for taxi fare by electronic money, the electronic money is automatically paid from the credit card B (personal card) ((2) and an arrow Y2 in FIG. 7). In other words, even in a case where the user U forgets to switch a settlement card, because the settlement card is automatically switched, it is possible to prevent the user U from mistakenly making payment by a corporate card on a nonwork day, for example.

### [Flow of Settlement Processing]

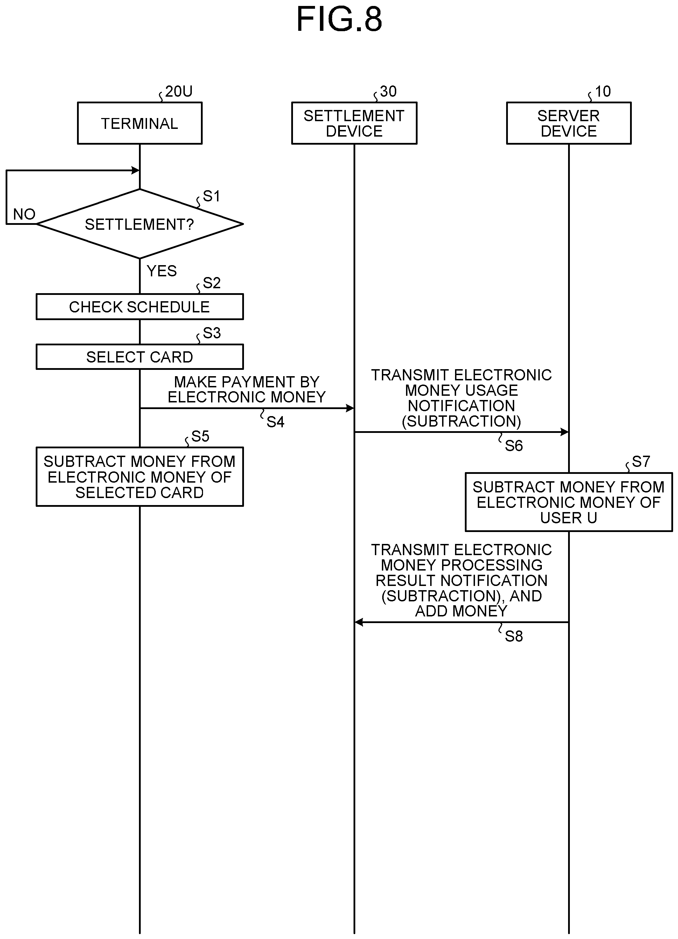

Next, a processing procedure of settlement processing according to the first embodiment will be described. FIG. 8 is a sequence diagram illustrating a processing procedure of settlement processing according to the first embodiment.

As illustrated in FIG. 1, in the terminal 20U, the settlement processing unit 234 determines whether or not electronic money settlement is to be made (Step S1). For example, in a case where the electronic money settlement application is selected by the user U, it is determined that electronic money settlement is to be made. In the terminal 20U, in a case where electronic money settlement is not to be made (Step S1: No), determination in Step S1 is repeated until an electronic money settlement instruction is issued.

In a case where electronic money settlement is to be made (Step S1: Yes), the card selection unit 233 checks the card selection information 224 (Step S2), and selects any of a plurality of settlement cards as a payment method of electronic money in accordance with a day of the week and a time slot, or content of a plan registered in a schedule (Step S3).

Subsequently, the user U makes payment of purchase money by electronic money topped up on the electronic money settlement application (Step S4). The terminal 20U subtracts money from electronic money topped up by the selected settlement card, on the electronic money settlement application (Step S5).

The settlement device 30 of the store transmits an electronic money processing result notification (subtraction processing result) to the server device 10 (Step S6). In accordance with the subtraction processing request, the server device 10 subtracts a used money amount (Step S7) from electronic money topped up by the terminal 20U of the user U, adds the money to the settlement device 30 of the store, and transmits an electronic money processing result notification (subtraction) and a credit notification (Step S8).

### [Effect of First Embodiment]

In this manner, in the terminal 20U according to the first embodiment, any one of a plurality of settlement cards is selected as a payment method of electronic money in the electronic money settlement application in accordance with a day of the week and a time slot, or a plan registered in a schedule of a scheduler. Then, in the terminal 20U, settlement processing of electronic money in an electronic settlement application is executed using a selected settlement card as a payment method of electronic money.

Accordingly, in the terminal 20U, by selecting any of a plurality of settlement cards as a payment method of electronic money in tandem with a day of the week and a time slot, or content of a plan registered in a schedule, it is possible to automatically switches a settlement card to be used as a payment method of electronic money.

Specifically, in the terminal 20U, during daytime hours or a business-planned time on a weekday, a corporate card is selected as a settlement card, and throughout a nonwork day, a personal card is selected as a payment method of electronic money. In other words, in the terminal 20U, a settlement card to be used is automatically selected in tandem with a schedule or a day of the week and a time slot. Thus, even in a case where the user U forgets to switch a settlement card, because a settlement card to be used is automatically switched in tandem with a day of the week and a time slot, or content of a plan registered in a schedule, it is possible to prevent the user U from paying electronic money by a wrong settlement card.

### [Second Embodiment]

Next, the second embodiment will be described. In the second embodiment, position detection of a terminal is performed, and automatic switching of a settlement card to be used as a payment method of electronic money is performed based on a day of the week and a time slot, or a plan registered in a schedule, and furthermore, the position of the terminal.

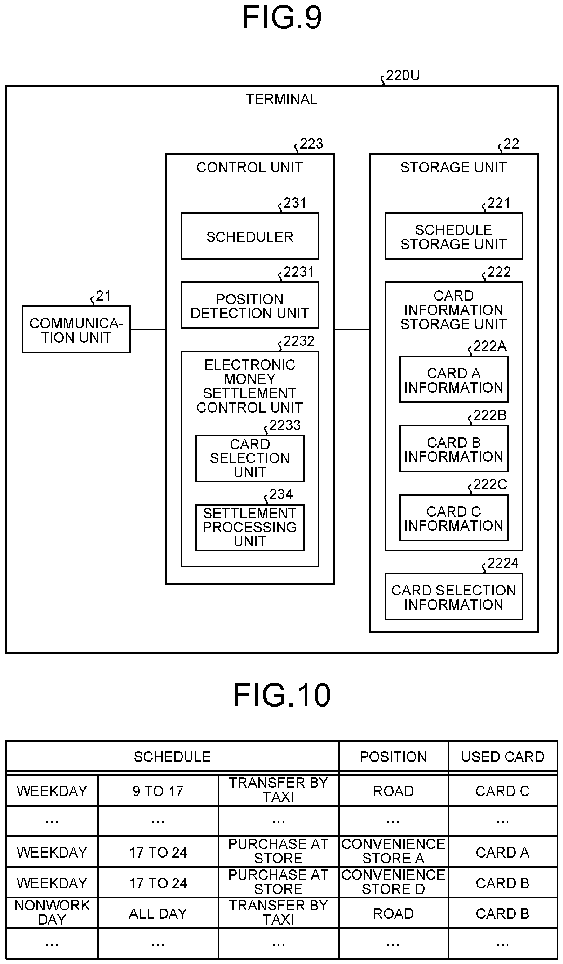

FIG. 9 is a block diagram illustrating an example of a configuration of a terminal according to the second embodiment. As illustrated in FIG. 9, a terminal 220U according to the second embodiment stores card selection information 2224, and includes a control unit 223 including a position detection unit 2231 and an electronic money settlement control unit 2232, as compared with the terminal 20U in FIG. 5.

FIG. 10 is a diagram illustrating an example of a data configuration of the card selection information 2224 illustrated in FIG. 9. As illustrated in FIG. 9, in the card selection information 2224, a settlement card to be selected as a payment method is associated with a day of the week, a time slot, and plan content in a schedule field, and a position detection result. For example, in a case where the user U is positioned in a convenience store D during a time slot from 17 to 24 on a weekday, the selection of a credit card B (personal card) as a settlement card is set.

The position detection unit 2231 detects the position of the terminal 220U using a positioning system such as the GPS, and outputs position information indicating the identified position. The position detection unit 2231 determines the name of a building (e.g., name of a store) at which the terminal 220U is positioned, and outputs the name of a store at which the user U is currently positioned.

The electronic money settlement control unit 2232 includes a function similar to the electronic money settlement control unit 232 illustrated in FIG. 5. The electronic money settlement control unit 2232 includes a card selection unit 2233 (selection unit).

The card selection unit 2233 selects any one of a plurality of settlement cards as a payment method of electronic money in the electronic money settlement application in accordance with a day of the week and a time slot, or a plan registered in a schedule, and a position of the terminal 220U. The card selection unit 2233 selects any one of a plurality of settlement cards as a payment method of electronic money in the electronic money settlement application in accordance with a day of the week and a time slot, or content of a plan registered in a schedule, and a store. That is, the card selection unit 2233 switches a settlement card based on a position detection result in accordance with a store at which electronic money settlement is to be made.

### [Selection Example of Settlement Card]

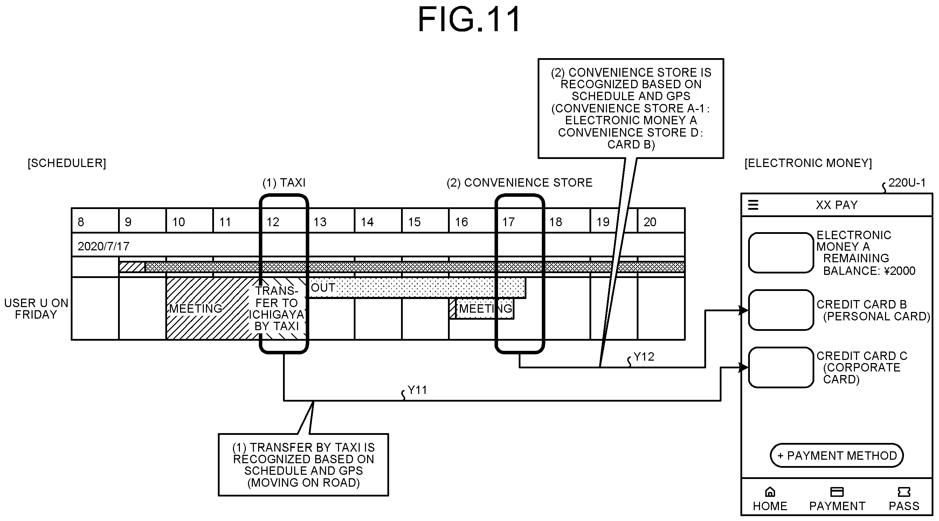

In the terminal 220U, a settlement card to be used as a payment method of electronic money settlement in the electronic money settlement application is automatically switched in tandem with a scheduler and a position detection result. The switching of a settlement card will be specifically described with reference to FIG. 11 to be described below. FIG. 11 is a diagram describing automatic switching processing of a settlement card according to the second embodiment. FIG. 11 illustrates a schedule of the user U on Friday, and an electronic money payment screen 220U-1 of the terminal 220U.

For the user U, a plan of "transfer on business by taxi" during a time slot from 12 to 13 on Friday is entered. Then, the terminal 20U determines, using a GPS function, that the terminal 20U is moving on a road. In this case, the card selection unit 2233 refers to the card selection information 2224, and selects a credit card C (corporate card) as a settlement card associated when the user U transfers by taxi during a time slot from 12 to 13 on Friday (weekday), and the terminal 220U is positioned on a road. Consequently, when the user U "transfers on business by taxi", and makes settlement for taxi fare by electronic money, the electronic money is automatically paid from the credit card C (corporate card) ((1) and an arrow Y11 in FIG. 11).

In contrast to this, during a time slot from 17 on a weekday during which no schedule is registered, as illustrated in the card selection information 2224, a settlement card to be used varies depending on a store (convenience store A, convenience store D). Thus, in a case where the user U makes payment of purchase money by electronic money at a convenience store at 17 on Friday, in the terminal 20U, a convenience store at which the terminal 220U is positioned is recognized using a GPS function, and the card selection unit 2233 switches a settlement card in accordance with the convenience store.

For example, the card selection unit 2233 switches a settlement card to the electronic money A in the case of the convenience store A, and switches a settlement card to the credit card B (personal card) in the case of the convenience store D. For example, in a case where the user U is positioned in the convenience store D, the card selection unit 2233 switches a settlement card to the credit card B (personal card). Consequently, when the user U makes private purchase at the convenience store D, and makes settlement for purchase money by electronic money, the electronic money is automatically paid from the credit card B (personal card) ((2) and an arrow Y12 in FIG. 11).

### [Flow of Settlement Processing]

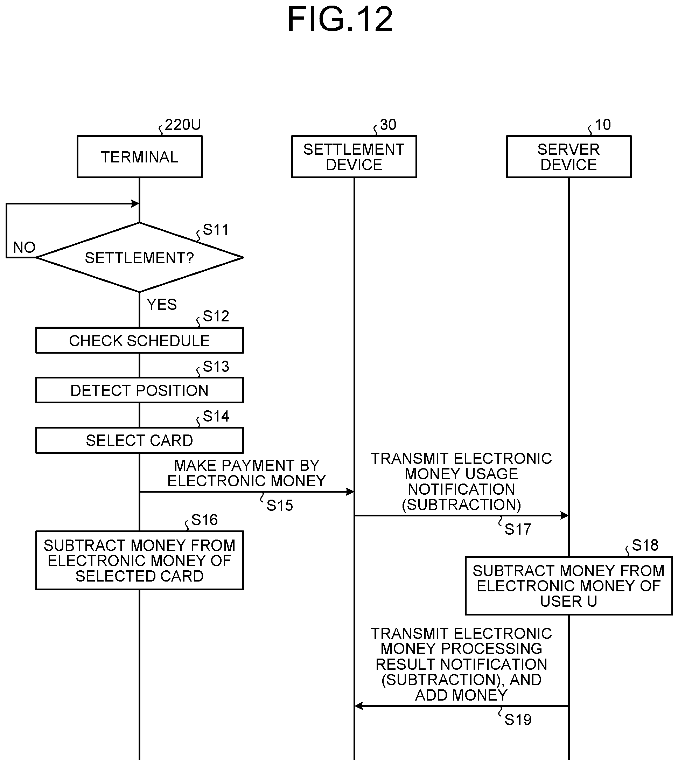

Next, a processing procedure of settlement processing according to the second embodiment will be described. FIG. 12 is a sequence diagram illustrating a processing procedure of settlement processing according to the second embodiment.

The processing in Steps S11 and S12 illustrated in FIG. 12 is the same as the processing in Steps S1 and S2 illustrated in FIG. 8. The position detection unit 2231 detects a position of the terminal 220U (Step S13). Then, the card selection unit 2233 selects any of a plurality of settlement cards as a payment method of electronic money in accordance with a day of the week and a time slot, or content of a plan registered in a schedule, and the position of the terminal 220U (Step S14). The processing in Steps S15 to S19 illustrated in FIG. 12 is the same as the processing in Steps S4 to S8 illustrated in FIG. 8.

### [Effect of Second Embodiment]

In this manner, in the second embodiment, position detection of the terminal 220U is performed, and automatic switching of a settlement card to be used as a payment method of electronic money is performed using the position of the terminal 220U in addition to a day of the week and a time slot, or a plan registered in a schedule. In addition, in the second embodiment, in the terminal 220U, because a store at which the user U is positioned is determined, and a settlement card to be used is selected in accordance with the store, an effect similar to the first embodiment is caused, and furthermore, it is also possible to automatically use a different settlement card depending on a store at which electronic money settlement is to be made.

### [Third Embodiment]

Next, the third embodiment will be described. In the third embodiment, in a case where a store at which a terminal is positioned is indeterminable, after a store is recognized by making an inquiry about a store by voice, automatic switching of a settlement card to be used as a payment method of electronic money is executed.

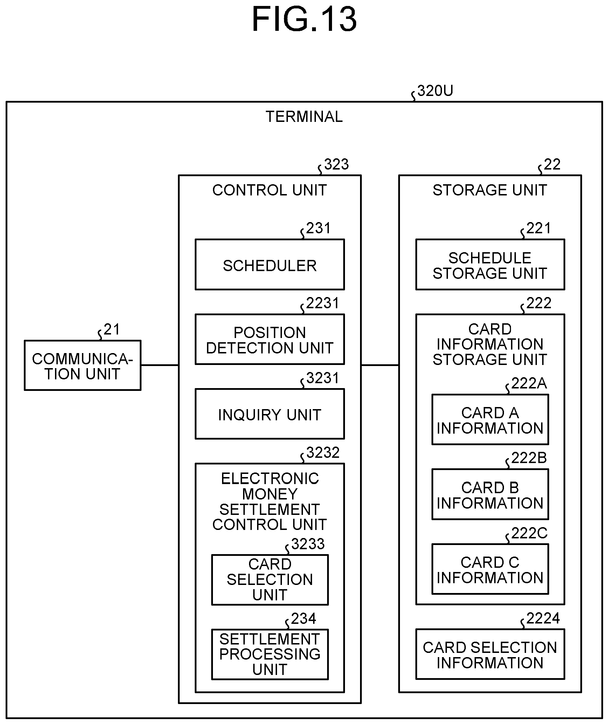

FIG. 13 is a block diagram illustrating an example of a configuration of a terminal according to the third embodiment. As illustrated in FIG. 13, a terminal 320U according to the third embodiment includes a control unit 323 including an inquiry unit 3231 and an electronic money settlement control unit 3232, in place of the control unit 223 of the terminal 220U in FIG. 9.

The inquiry unit 3231 outputs voice information for inquiring about the position of the terminal 320U, and receives input of voice information from the user U that indicates the position of the terminal 320U. When a store at which the user U is positioned has been unable to be determined by the position detection unit 2231, the inquiry unit 3231 outputs voice for inquiring about a store at which the user U is positioned, to the user U, and outputs a store name or the like that is received from the user U as an answer to the inquiry, to a card selection unit 3233.

The electronic money settlement control unit 3232 includes a function similar to the electronic money settlement control unit 232 illustrated in FIG. 5. The electronic money settlement control unit 3232 includes the card selection unit 3233 (selection unit).

The card selection unit 3233 selects any one of a plurality of settlement cards as a payment method of electronic money in the electronic money settlement application in accordance with a day of the week and a time slot, or a plan registered in a schedule, and a store or voice information of which input has been received by the inquiry unit 3231.

### [Selection Example of Settlement Card]

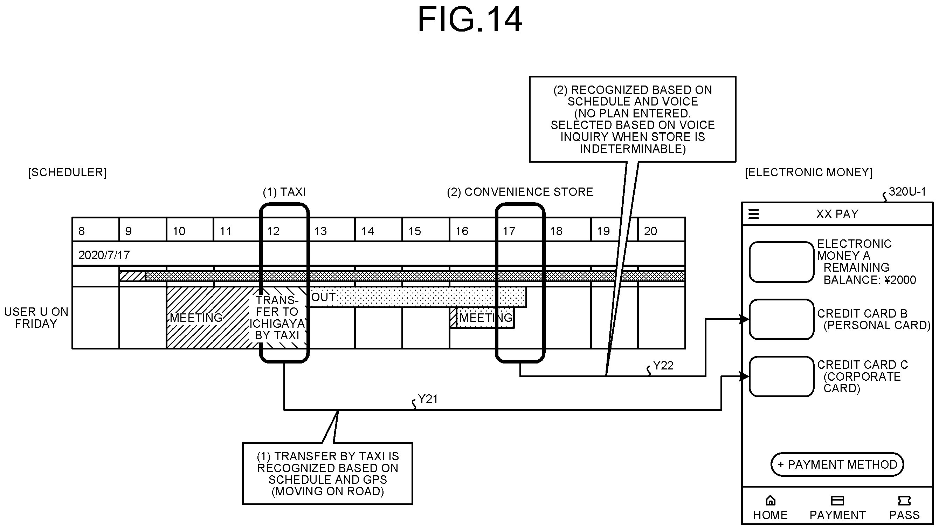

In the terminal 320U, in a case where a store at which a terminal 320 is positioned has been indeterminable, the user U is inquired of about a store, a store is recognized based on voice of which input has been received, and a settlement card to be used as a payment method of electronic money settlement is selected. The switching of a settlement card will be specifically described with reference to FIG. 14 to be described below. FIG. 14 is a diagram describing automatic switching processing of a settlement card according to the third embodiment. FIG. 14 illustrates a schedule of the user U on Friday, and an electronic money payment screen 320U-1 of the terminal 320U.

In a case where a plan of "transfer on business by taxi" during daylight on a weekday is entered, and it has been determinable using a GPS function that the terminal 320U is moving on a road, similarly to the case of the second embodiment, the card selection unit 3233 selects a credit card C (corporate card) as a settlement card ((1) and an arrow Y21 in FIG. 14).

Then, in a case where a store at which the terminal 320U is positioned cannot be determined using the GPS or the like during a time slot from 17 on a weekday during which no schedule is registered, the user U is inquired of about a store at which the user U is positioned, and a store is recognized based on an answer to the inquiry that is made by the user U. The card selection unit 3233 thereby selects a settlement card to be used as a payment method of electronic money settlement, in accordance with the store. For example, in a case where it has been determined that the user U is positioned at the convenience store D, at 17 on Friday based on a voice inquiry, the card selection unit 3233 switches a settlement card to a credit card B (personal card) ((2) and an arrow Y22 in FIG. 14).

### [Flow of Settlement Processing]

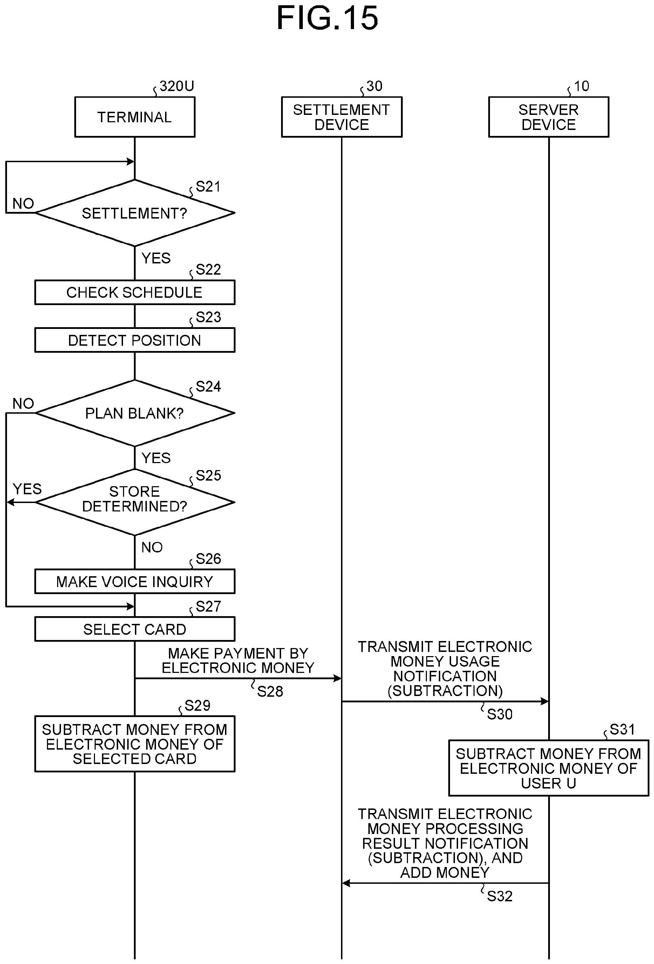

Next, a processing procedure of settlement processing according to the third embodiment will be described. FIG. 15 is a sequence diagram illustrating a processing procedure of settlement processing according to the third embodiment.

The processing in Steps S21 to S23 illustrated in FIG. 15 is the same as the processing in Steps S11 to S13 illustrated in FIG. 12. The card selection unit 3233 determines whether or not a plan in a schedule of the user U is blank at the present time (Step S24). In a case where a plan in a schedule of the user U is blank (Step S24: Yes), it is determined whether or not a store at which the terminal 320U is positioned has been determined by the position detection unit 2231 (Step S25).

In a case where a store at which the terminal 320U is positioned has not been determined (Step S25: No), a voice inquiry of outputting voice for inquiring about the position of the terminal 320U, to the user U, and receiving input of voice information for providing an answer of the position of the terminal 320U, from the user U is made (Step S26).

In a case where a plan in a schedule of the user U is not blank (Step S24: No), in a case where a store at which the terminal 320U is positioned has been determined (Step S25: Yes), or after the processing in Step S26, the card selection unit 3233 selects any one of a plurality of settlement cards as a payment method of electronic money in the electronic money settlement application in accordance with a day of the week and a time slot, or a plan registered in a schedule, and a store or voice information of which input has been received by the inquiry unit 3231 (Step S27). The processing in Steps S28 to S32 illustrated in FIG. 15 is the same as the processing in Steps S15 to S19 illustrated in FIG. 12.

### [Effect of Third Embodiment]

In this manner, in the third embodiment, an effect similar to the first embodiment is caused, and in a case where a store at which the terminal 320U is positioned is indeterminable, because a settlement card to be used as a payment method of electronic money is selected after a store is recognized by inquiring of the user U about a store by voice, a settlement card can be accurately selected.

### [Fourth Embodiment]

Next, the fourth embodiment will be described. In the fourth embodiment, after a store at which electronic money settlement is to be made is recognized using the position of a terminal and a past usage history of electronic money, automatic switching of a settlement card to be used as a payment method of electronic money is executed.

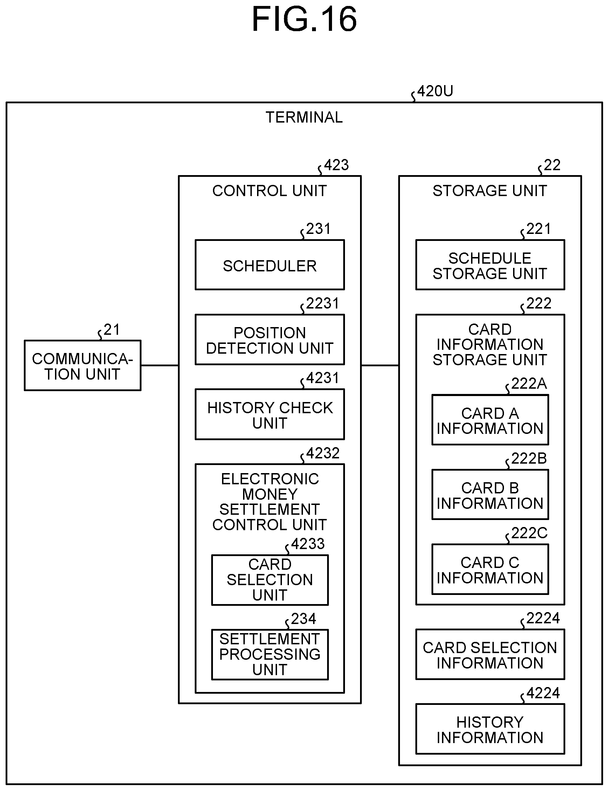

FIG. 16 is a block diagram illustrating an example of a configuration of a terminal according to the fourth embodiment. As illustrated in FIG. 16, a terminal 420U according to the fourth embodiment stores history information 4223, and includes a control unit 423 including a history check unit 4231 and an electronic money settlement control unit 4232, as compared with the terminal 220U in FIG. 9.

The history information 4223 is information that associates a settlement history of electronic money that includes settlement date and time, a settlement money amount, and a settlement store, and position information of the terminal 420U at the time of settlement that has been detected by a position detection unit 2231.

The history check unit 4231 refers to history information 4224, and checks whether the history information 4224 includes position information approximately equivalent to position information detected by the position detection unit 2231. In a case where the history information 4224 includes position information approximately equivalent to position information detected by the position detection unit 2231, the history check unit 4231 outputs a settlement store corresponding to the position information, to a card selection unit 4233.

The electronic money settlement control unit 4232 includes a function similar to the electronic money settlement control unit 232 illustrated in FIG. 5. The electronic money settlement control unit 4232 includes the card selection unit 4233 (selection unit).

The card selection unit 4233 selects any one of a plurality of settlement cards as a payment method of electronic money in the electronic money settlement application in accordance with a day of the week and a time slot, or a plan registered in a schedule, a position of the terminal 420U, and a usage history of electronic money. In a case where a schedule is blank, the card selection unit 4233 recognizes a settlement store corresponding to a position approximately equivalent to the current position of the terminal 420U that is included in the history information 4224, and has been output by the history check unit 4231, as a store at which electronic money settlement is to be made, and selects a settlement card corresponding to the store.

### [Selection Example of Settlement Card]

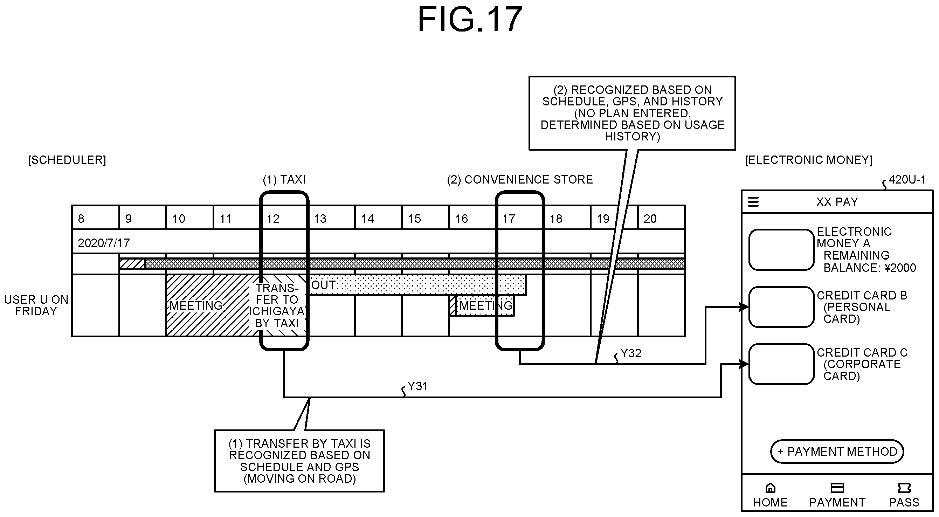

In the terminal 420U, a store at which a terminal 420 is positioned is recognized from a position detection result obtained by the GPS or the like, and a past settlement history of electronic money, and a settlement card to be used as a payment method of electronic money settlement is selected. The switching of a settlement card will be specifically described with reference to FIG. 17 to be described below. FIG. 17 is a diagram describing automatic switching processing of a settlement card according to the fourth embodiment. FIG. 17 illustrates a schedule of the user U on Friday, and an electronic money payment screen 420U-1 of the terminal 420U.

In a case where a plan of "transfer on business by taxi" during daylight on a weekday is entered, and it has been determinable using a GPS function that the terminal 420U is moving on a road, similarly to the case of the second embodiment, the card selection unit 3233 selects a credit card C (corporate card) as a settlement card ((1) and an arrow Y31 in FIG. 17).

Then, in a case where the current time falls within a time slot from 17 on a weekday, and a plan is blank, the terminal 420U detects a position of the terminal 420U using the GPS or the like. Then, the terminal 420U recognizes a settlement store corresponding to a position approximately equivalent to the current position of the terminal 420U that is included in the history information 4224, as a store at which electronic money settlement is to be made, and the card selection unit 4233 selects a settlement card corresponding to the store. For example, the card selection unit 4233 recognizes a store (for example, convenience store D) in the history information 4224 that corresponds to a position approximately equivalent to position information of the terminal 420U that has been detected by the GPS or the like, as a store at which electronic money settlement is to be made, and switches a settlement card to a credit card B (personal card) ((2) and an arrow Y32 in FIG. 17).

### [Flow of Settlement Processing]

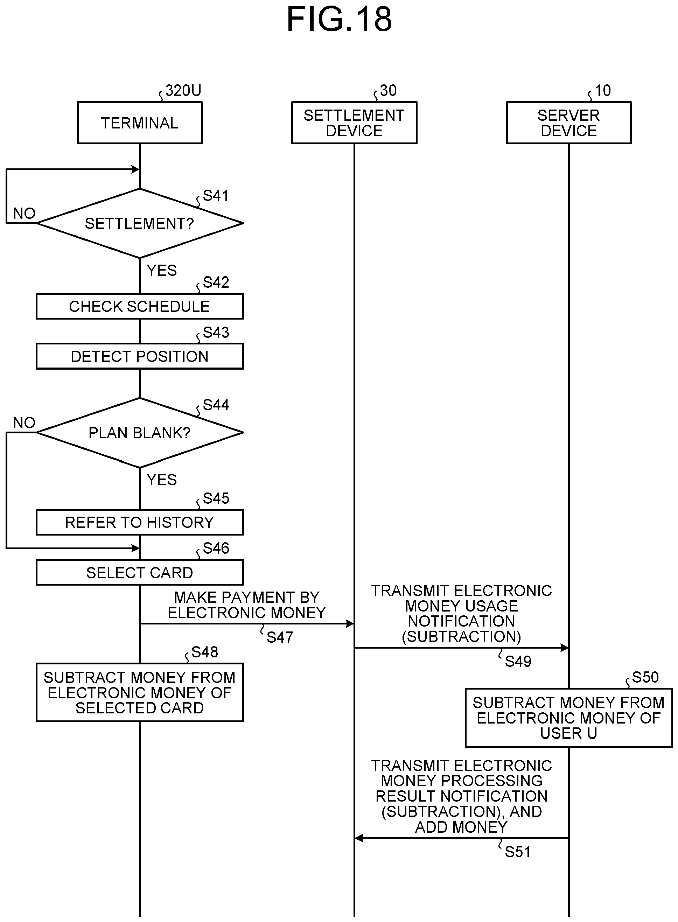

Next, a processing procedure of settlement processing according to the fourth embodiment will be described. FIG. 18 is a sequence diagram illustrating a processing procedure of settlement processing according to the fourth embodiment.

The processing in Steps S41 to S43 illustrated in FIG. 18 is the same as the processing in Steps S11 to S13 illustrated in FIG. 12. The card selection unit 4233 determines whether or not a plan in a schedule of the user U is blank at the present time (Step S44). In a case where a plan in a schedule of the user U is blank (Step S44: Yes), the history check unit 4231 refers to the history information 4224 (Step S45), and outputs a settlement store corresponding to position information approximately equivalent to position information detected by the position detection unit 2231 that is included in the history information 4224, to the card selection unit 4233. Note that, in a case where the history information 4224 does not include position information approximately equivalent to position information detected by the position detection unit 2231, the terminal 420U may recognize a store by making a voice inquiry or the like.

In a case where a plan in a schedule of the user U is not blank (Step S44: No), or after the processing in Step S45, the card selection unit 4233 selects any one of a plurality of settlement cards as a payment method of electronic money in the electronic money settlement application in accordance with a day of the week and a time slot, or a plan registered in a schedule, the position of the terminal 420U, and a usage history of electronic money (Step S46). The processing in Steps S47 to S51 illustrated in FIG. 18 is the same as the processing in Steps S15 to S19 illustrated in FIG. 12.

### [Effect of Fourth Embodiment]

In this manner, in the fourth embodiment, an effect similar to the first embodiment is caused, and because a settlement card to be used as a payment method of electronic money is selected after a store at which electronic money settlement is to be made is recognized using the position of the terminal 420U and a past usage history of electronic money, a settlement card can be accurately selected.

Note that, in the terminals 20U, 220U, 320U, and 420U, electronic money is not limited to electronic money in Japanese Yen, and electronic money in a plurality of currencies can be topped up on a mobile.

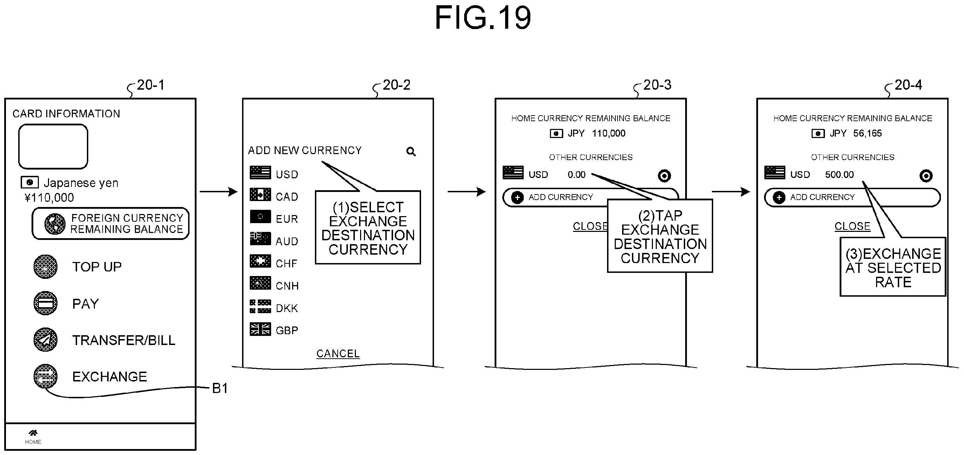

The top-up of electronic money in a plurality of types of currencies that is executed using a mobile settlement application will be described. FIG. 19 is a diagram illustrating an example of a top-up screen of electronic money in a plurality of types of currencies.

As illustrated in a screen 20-1 in FIG. 19, the mobile settlement application can perform top-up of electronic money in a plurality of types of currencies, payment using electronic money, and the like in cooperation with credit card settlement. Specifically, the description will be given of an example case where the user owns topped-up money of 110-thousand Japanese Yen, using credit card settlement, and a part of the topped-up money of 110-thousand Japanese Yen is exchanged into another currency (for example, electronic money in US dollars).

In this case, the user taps an exchange button B1 on the screen 20-1. Then, the screen 20-1 changes to a screen 20-2, and information indicating various exchangeable currencies is displayed. If the user selects an exchange destination currency from among these ((1) in FIG. 19), the screen 20-2 changes to a screen 20-3. If the user taps an exchange destination currency ((2) in FIG. 19), the screen 20-3 changes to a screen 20-4, and a rate of the selected currency is displayed. Then, if the user issues an instruction to exchange electronic money at the selected rate ((3) in FIG. 19), electronic money 500 dollars in exchanged US dollars are added to a terminal of the user, and 500 US dollars and an exchange premium are subtracted from the topped-up Japanese Yen. In the terminals 20U, 220U, 320U, and 420U, electronic money to be used for settlement may be selected from a plurality of currencies topped up using the mobile settlement application.

### [System Configuration, Etc.]

In addition, each component of each device illustrated in the drawings is functional concept, and is not always requested to be physically formed as illustrated in the drawings. In other words, a specific configuration of separation and integration of devices is not limited to that illustrated in the drawings, and all or a part thereof can be functionally or physically separated or integrated in an arbitrary unit in accordance with various types of loads, usage statuses, and the like. Furthermore, all or an arbitrary part of each processing function to be performed in each device can be implemented by a CPU or a graphics processing unit (GPU) and a program analyzed and executed by the CPU or the GPU, or can be implemented as wired-logic-based hardware.

In addition, among processes described in the present embodiment, all or a part of processes described to be automatically performed can also be manually performed, or all or a part of processes described to be manually performed can also be automatically performed by a known method. Moreover, processing procedures, control procedures, specific names, and information including various types of data and parameters, which have been described in the above document and the drawings can be arbitrarily changed unless otherwise specified.

### [Program]

In addition, it is also possible to create a program that describes processing to be executed by the terminals 20U, 220U, 320U, and 420U, and the server device 10, which has been described in the above embodiment, in a computer-executable language. For example, it is also possible to create a program that describes processing to be executed by the terminals 20U, 220U, 320U, and 420U, and the server device 10 in the embodiments, in a computer-executable language. In this case, by the computer executing the program, an effect similar to the above embodiment can be obtained. Furthermore, processing similar to the above embodiment may be implemented by recording the program onto a computer-readable recording medium, and causing the computer to read the program recorded on the recording medium, and execute the program.

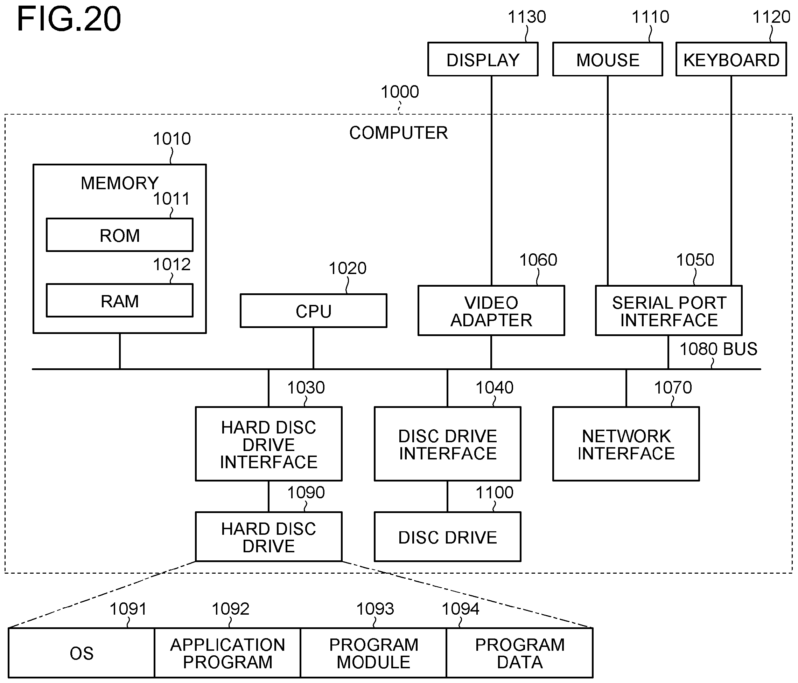

FIG. 20 is a diagram illustrating a computer that executes a program. As exemplified in FIG. 20, a computer 1000 includes, for example, a memory 1010, a CPU 1020, a hard disc drive interface 1030, a disc drive interface 1040, a serial port interface 1050, a video adapter 1060, and a network interface 1070, and these components are connected via a bus 1080.

As exemplified in FIG. 20, the memory 1010 includes a read only memory (ROM) 1011 and a RAM 1012. The ROM 1011 stores a boot program such as a basic input output system (BIOS), for example. As exemplified in FIG. 20, the hard disc drive interface 1030 is connected to a hard disc drive 1090. The disc drive interface 1040 is connected to a disc drive 1100. For example, a detachable storage medium such as a magnetic disc or an optical disc is inserted into the disc drive 1100. The serial port interface 1050 is connected to a mouse 1110 and a keyboard 1120, for example. The video adapter 1060 is connected to a display 1130, for example.

Here, as exemplified in FIG. 20, the hard disc drive 1090 stores, for example, an operation system (OS) 1091, an application program 1092, a program module 1093, and program data 1094. In other words, the above-described program is stored into the hard disc drive 1090, for example, as a program module in which a command to be executed by the computer 1000 is described.

In addition, various types of data described in the above embodiment is stored into the memory 1010 or the hard disc drive 1090, for example, as program data. Then, the CPU 1020 loads the program module 1093 and the program data 1094 that are stored in the memory 1010 and the hard disc drive 1090, onto the RAM 1012 as necessary, and executes various processing procedures.

Note that the program module 1093 and the program data 1094 that are related to programs need not be always stored in the hard disc drive 1090. For example, the program module 1093 and the program data 1094 may be stored into a detachable storage medium, and read out by the CPU 1020 via a disc drive or the like. Alternatively, the program module 1093 and the program data 1094 that are related to programs may be stored into another computer connected via a network (a local area network (LAN), a wide area network (WAN), or the like), and read out by the CPU 1020 via the network interface 1070.

The above embodiments and modifications thereof are included in the technique disclosed by this application, and are similarly included in the scopes of the invention described in the appended claims, and its equivalent.

### [Explanation of Reference]

- 1: SETTLEMENT SYSTEM
- 10: SERVER DEVICE
- 11, 21: COMMUNICATION UNIT
- 12, 22: STORAGE UNIT
- 13, 23, 223, 323, 423: CONTROL UNIT
- 20U, 220U, 320U, 420U: TERMINAL
- 121: MONEY AMOUNT INFORMATION STORAGE UNIT
- 122: USAGE HISTORY INFORMATION STORAGE UNIT
- 131: RECEPTION UNIT
- 132: NOTIFICATION UNIT
- 133: MONEY FLOW CONTROL UNIT
- 221: SCHEDULE STORAGE UNIT
- 222: CARD INFORMATION STORAGE UNIT
- 224, 2224: CARD SELECTION INFORMATION
- 231: SCHEDULER
- 232, 2232, 3232, 4232: ELECTRONIC MONEY SETTLEMENT CONTROL UNIT
- 233, 2233, 3233, 4233: CARD SELECTION UNIT
- 234: SETTLEMENT PROCESSING UNIT
- 2231: POSITION DETECTION UNIT
- 3231: INQUIRY UNIT
- 4224: HISTORY INFORMATION

## Claims

1. A terminal device equipped with an application being an application in which a plurality of settlement cards are registered as a payment method of electronic money, and an application that performs settlement processing of the electronic money, the terminal device comprising:
a storage unit configured to store a schedule of a user of the terminal device;
a selection unit configured to select any one of the plurality of settlement cards as a payment method of the electronic money in the application in accordance with a day of a week and a time slot, or a plan registered in the schedule; and
a settlement processing unit configured to execute settlement processing of the electronic money in the application using the settlement card selected by the selection unit, as a payment method of the electronic money.

2. The terminal device according to claim 1, wherein the selection unit selects, from among the plurality of settlement cards, a private settlement card of the user or a settlement card supplied from an employer of the user, as a payment method of the electronic money in accordance with a day of a week and a time slot, or content of a plan registered in the schedule.

3. The terminal device according to claim 1 or 2, further including
a position detection unit configured to detect a position of the terminal device,
wherein the selection unit selects any one of the plurality of settlement cards as a payment method of the electronic money in the application in accordance with a day of a week and a time slot, or a plan registered in the schedule, and a position of the terminal device.

4. The terminal device according to claim 3,
wherein the position detection unit determines a store at which the terminal device is positioned, and
wherein the selection unit selects any one of the plurality of settlement cards as a payment method of the electronic money in the application in accordance with a day of a week and a time slot, or content of a plan registered in the schedule, and the store.

5. The terminal device according to claim 4, further including
an inquiry unit configured to output voice information for inquiring about a position of the terminal device, and receive input of voice information indicating a position of the terminal device,
wherein the selection unit selects any one of the plurality of settlement cards as a payment method of the electronic money in the application in accordance with a day of a week and a time slot, or a plan registered in the schedule, and the store or voice information of which input has been received by the inquiry unit.

6. The terminal device according to claim 3,
wherein the storage unit stores a usage history of the electronic money in the terminal device, and
wherein the selection unit selects any one of the plurality of settlement cards as a payment method of the electronic money in the application in accordance with a day of a week and a time slot, or a plan registered in the schedule, a position of the terminal device, and a usage history of the electronic money.

7. A settlement method to be executed in a terminal device equipped with an application being an application in which a plurality of settlement cards are registered as a payment method of electronic money, and an application that performs settlement processing of the electronic money,
the terminal device including a storage unit configured to store a schedule of a user of the terminal device, the settlement method comprising:
a process of selecting any one of the plurality of settlement cards as a payment method of the electronic money in the application in accordance with a day of a week and a time slot, or a plan registered in the schedule; and
a process of executing settlement processing of the electronic money in the application using the settlement card selected in the selecting process, as a payment method of the electronic money.
